# EUROPÄISCHE PATENTSCHRIFT

(11) **EP 3 545 259 B1**
(45) Veröffentlichungstag und Bekanntmachung des Hinweises auf die Patenterteilung: **27.11.2019**
(21) Anmeldenummer: 19704777.2
(22) Anmeldetag: 08.02.2019
(51) Int. Cl.: G01B 11/16, G01B 11/24, G01M 17/02

(54) **VERFAHREN UND VORRICHTUNG ZUR UNTERSUCHUNG VON ROTATIONSSYMMETRISCHEN PRÜFOBJEKTEN**
METHOD AND APPARATUS FOR EXAMINING ROTATIONALLY SYMMETRIC TEST OBJECTS
PROCÉDÉ ET DISPOSITIF D'ANALYSE D'OBJETS DE TEST À SYMÉTRIE DE RÉVOLUTION

(30) Priorität: 18.02.2018 DE 102018001255
(43) Veröffentlichungstag der Anmeldung: 02.10.2019
(73) Patentinhaber: Mähner, Bernward, 82284 Grafrath (DE)
(72) Erfinder: Mähner, Bernward, 82284 Grafrath (DE)
(74) Vertreter: Flügel Preissner Schober Seidel
(86) Internationale Anmeldenummer: PCT/EP2019/053121
(87) Internationale Veröffentlichungsnummer: WO 2019/158440

(56) Entgegenhaltungen:
- EP-A1- 1 284 409
- DE-B4- 10 333 802
- US-A1- 2017 160 079

## Beschreibung

Es ist bekannt, dass zur flächenhaften Bestimmung von Verschiebungen oder Dehnungen eines Prüfobjektes mit diffus streuender Oberfläche interferometrische Messverfahren, wie das ESPI- (Electronic Speckle Pattern Interferometry) oder das Shearing Verfahren zum Einsatz kommen. Welches Verfahren für ein gegebenes Prüfobjekt angewendet werden kann, hängt von der zu messenden Größe und dem erforderlichen Messbereich ab. Ein weiterer Aspekt bei der Auswahl des Messverfahrens sind aber auch die Kosten für das Messsystem. Hier hat beispielsweise das Shearing Verfahren gegenüber anderen interferometrischen Messverfahren klare Vorteile, da es wegen der kurzen erforderlichen Kohärenzlänge mit einfachen Laserdioden auskommt. Ferner ist es, wie beispielsweise die Patentschrift DE 198 59 725 C2 lehrt, auch mit mehreren Laserdioden funktionstüchtig, so dass mit wenig Aufwand die Beleuchtung an das zu prüfende Objekt angepasst werden kann. Eine weitere apparative Vereinfachung gegenüber dem Shearing Verfahren stellt das in der Patentschrift US 6,934,018 B2 offenbarte differometrische Verfahren dar, da auf der Kameraseite das Interferometer entfällt.

Bei den genannten interferometrischen Prüfverfahren werden bei statischer Prüfung üblicherweise zwei Zustände des Prüfobjektes verglichen, indem das Objekt in zwei unterschiedlichen Belastungszuständen aufgenommen wird und die Interferogramme der beiden Zustände subtrahiert werden. Hierdurch ergibt sich ein Differenzinterferogramm, welches die Verschiebung oder die Dehnung des Objektes zwischen den beiden Zuständen in Form von Interferenzlinien darstellt. Wird der Messkopf mit einer Phasenschiebeeinheit ausgerüstet, so kann eine erweiterte Auswertung nach dem Prinzip des Phasenshiftverfahrens durchgeführt werden (W.Osten, "Digitale Verarbeitung und Auswertung von Interferenzbildern", Kap. 6, Akademie Verlag ISBN 3-05-501294-1). Hierbei werden Phasenbilder erzeugt, welche jedem Bildpunkt einen bestimmten Phasenwinkel zuordnen. Das Phasenshiftverfahren bietet den Vorteil eines normierten Ergebnisbildes, dessen Grauwerte im gesamten Bild proportional zum ermittelten Phasenwinkel sind. Die Lesbarkeit solcher Ergebnisbilder ist gegenüber einfachen Interferenzlinienbildern klar verbessert.

Bei der Differometrie werden lediglich Specklemuster von verschiedenen Belastungszuständen subtrahiert. Es kann nur zwischen solchen Punkten unterschieden werden, bei denen die Verformung Null ist, und solchen, bei denen die Verformung ungleich Null ist. Eine quantitative Auswertung ist nicht möglich. Ebenso ist aufgrund des fehlenden Interferometers kein Phasenshiftverfahren durchführbar.

Je nach Form und Größe des Prüfobjektes muss die interferometrische Messung häufig nacheinander oder gleichzeitig in mehreren Abschnitten erfolgen. Eine typische Anwendung dieser Art ist beispielsweise die interferometrische Prüfung von Reifen. So beschreibt die Patentschrift DE 42 31 578 C2 ein Verfahren zur Ermittlung von Verformungen an Prüfobjekten, wobei das Ausführungsbeispiel zeigt, dass insbesondere an die sektorweise Prüfung von Reifen gedacht wurde. Die Patentschrift US 5 786 533 schlägt ein Verfahren zum gezielten Lokalisieren von Defekten in Reifen insbesondere im Gürtelbereich vor. Auch hier lässt die gezeigte Anordnung von Messkopf und Prüfobjekt eine Auswertung des gesamten Gürtelbereiches nur dann zu, falls in mehreren Sektoren geprüft wird.

Die Positionierung des Messkopfes relativ zum Prüfobjekt kann durch geometrische Vermessung des Prüfobjekts und anschließende Berechnung einer geeigneten Position für den Messkopf erfolgen. Dies ist beispielsweise in der Patentschrift DE 103 33 802 B4 beschrieben.

Ein Verfahren zur Korrektur von Formdaten eines ringförmigen, rotierenden Objekts, beispielsweise eines Reifens, und eine Vorrichtung zur Inspektion eines solchen Objekts beschreibt US 2017/0160079 A1.

Üblicherweise werden bei abschnittsweise prüfenden Messsystemen die Ergebnisbilder von den einzelnen Abschnitten einzeln oder nebeneinander angeordnet auf einem Sichtsystem angezeigt.

Die Offenlegungsschrift EP 1 284 409 A1 zeigt davon ausgehend ein Verfahren zur Transformation der Ergebnisbilder bzw. der darin abgebildeten Abschnitte des Prüfobjektes in ein gemeinsames Objektkoordinatensystem. Hierzu wird parallel zur Erfassung der Oberflächenverformung die Objektoberfläche auch flächenhaft topometrisch vermessen und den die Objektverformung darstellenden Ergebnisbildern bildpunktweise die zutreffenden Raumkoordinaten zugewiesen. Dieses Verfahren verwendet ein flächenhaft arbeitendes Konturerfassungssystem, das auch integraler Bestandteil des Messkopfes sein kann.

In der Praxis hat es sich allerdings gezeigt, dass der apparative Aufwand zur flächenhaften topometrischen Erfassung der Objektoberfläche nach obenstehendem Verfahren, insbesondere bei Verwendung von mehreren Prüfköpfen, erhebliche Kosten verursacht und darüber hinaus die zur Konturerfassung erforderliche zusätzliche Rechenzeit im industriellen Einsatz nicht immer akzeptabel ist.

Aufgabe des neuen Verfahrens und der neuen Vorrichtung ist es daher, eine kostengünstige Alternative aufzuzeigen, und zwar für die Anwendungsfälle, bei denen das Prüfobjekt aus einem zumindest näherungsweise rotationssymmetrischen Körper, so zum Beispiel einem Fahrzeug- oder Flugzeugreifen, besteht.

Diese Aufgabe wird durch das in Patentanspruch 1 angegebene Verfahren und die in Patentanspruch 14 angegebene Vorrichtung (Prüfsystem) gelöst.

Vorteilhafte Weiterbildungen sind in den jeweiligen Unteransprüchen angegeben.

Erfindungsgemäß wird das rotationssymmetrische Prüfobjekt, das insbesondere ein Fahrzeug- oder Flugzeugreifen sein kann, zur Prüfung verschiedenen Belastungen ausgesetzt. Diese Belastung kann beispielsweise durch Anheben und Absenken des Umgebungsdruckes erzeugt werden. Zur Untersuchung des Prüfobjektes über seinen gesamten Umfang wird die Objektoberfläche in räumlich versetzten Abschnitten mit ein oder mehreren Messköpfen mit jeweils einer Kamera mit Bildsensor untersucht. Die Messköpfe können insbesondere interferometrische Messköpfe sein. Der Bildsensor besteht beispielsweise aus einem CCD oder einem CMOS Flächensensor. Der räumliche Versatz kann dabei beispielsweise durch Drehen des Prüfobjektes um seine Rotationsachse relativ zum Messkopf bzw. den Messköpfen erzeugt werden.

Zur flächigen Erfassung der durch die verschiedenen Belastungen hervorgerufenen Verschiebungen oder Dehnungen der Objektoberfläche werden Abbildungen vom Prüfobjekt von dem Bildsensor erfasst und diese zur Weiterverarbeitung einem Bildverarbeitungssystem zugeführt. Hierdurch ist beispielsweise die Anwendung eines Phasenshiftverfahrens möglich.

Aus den erzeugten Abbildungen werden vom Bildverarbeitungssystem die Verschiebung oder den Spannungs-/ Dehnungszustand des Prüfobjektes darstellende Ergebnisbilder berechnet. Die Ergebnisbilder können beispielsweise mittels eines Phasenshiftverfahrens erzeugte Phasendifferenzbilder sein. Erfindungsgemäß wird die räumliche Position der einzelnen untersuchten Abschnitte zueinander ermittelt. Hierzu wird wenigstens ein Axialschnitt von dem Prüfobjekt ermittelt. Der Axialschnitt - im Sinne der Erfindung -besteht aus Schnitt- bzw. Stützpunkten von der Oberfläche des Prüfobjekts mit einer Schnittebene, in der die Rotationsachse des Prüfobjekts liegt. Der Axialschnitt kann neben gemessenen Stützpunkten auch berechnete Stützpunkte enthalten oder Stützpunkte mit Koordinaten deren Komponenten zu einem Teil gemessen zum anderen Teil berechnet sind. Der Axialschnitt kann nur wenige einzelne gemessene Stützpunkte enthalten. Die Messpunkte können auch aus verschiedenen Axialschnitten stammen, deren Schnittebenen gegeneinander gedreht sind. Die Stützpunkte können beispielsweise zu Darstellungszwecken zu einer Konturlinie verbunden werden.

Der Axialschnitt kann mit Vorteil von der Außenseite des Prüfobjektes ermittelt werden und/oder von der Innenseite des Prüfobjektes. Die Vermessung von Außen- und Innenseite ist insbesondere dann von Vorteil, falls das Prüfobjekt im Verhältnis zu seiner Größe über erhebliche Wandstärken oder erhebliche Schwankungen in der Wandstärke verfügt. Besitzt das Prüfobjekt neben der Rotationssymmetrie weitere Symmetrieeigenschaften, so z.B. eine Spiegelsymmetrie im Axialschnitt, so genügt es, eine Hälfte des Axialschnitts messtechnisch zu erfassen und die andere Hälfte durch Spiegelung an der Symmetrieachse zu berechnen.

Der ermittelte Axialschnitt wird erfindungsgemäß dazu verwendet, um für die untersuchten Abschnitte der Objektoberfläche jeweils die zutreffende Position und Ausrichtung des Messkopfes relativ zu dem Axialschnitt zu ermitteln. Die Ausrichtung ist dabei die Lage der optischen Achse der Kamera des Messkopfes zum Axialschnitt. Hierzu notwendige Berechnungen werden mit Vorteil in der Schnittebene des Axialschnittes durchgeführt. Ferner wird die Drehstellung des Messkopfes in Umfangsrichtung des Prüfobjekts relativ zum Prüfobjekt ermittelt. In einem weiteren Verfahrensschritt wird daraus die räumliche Position und Ausrichtung des Messkopfes zum Prüfobjekt für jeden geprüften Abschnitt ermittelt.

Aus den ermittelten Positionen und Drehstellungen werden erfindungsgemäß die räumlichen Positionen der in den Ergebnisbildern jeweils abgebildeten Abschnitte von der Objektoberfläche relativ zum Prüfobjekt berechnet.

Aufgrund der Ermittlung der Position und der Ausrichtung des Messkopfes relativ zum Axialschnitt erhält man rechnerisch zumindest näherungsweise die tatsächliche Position des Messkopfes relativ zum Prüfobjekt für jeden geprüften Abschnitt. Es entfällt damit der Aufwand, jeden erfassten Abschnitt des Prüfobjekts auch topometrisch zu vermessen. Gemäß einem weiteren Aspekt der Erfindung werden darüber hinaus für die in den Ergebnisbildern abgebildeten Punkte von der Oberfläche des Prüfobjektes die Raumkoordinaten berechnet und den entsprechenden Bildpunkten zugeordnet. Die Berechnung der Raumkoordinaten erfolgt mit Vorteil unter Annahme der Rotationssymmetrie des Prüfobjektes. Dadurch kann eine Projektion eines durch den Axialschnitt festgelegten Rotationskörpers auf die Bildebene für jede Abbildung des Prüfobjektes berechnet werden, woraus wiederum die Raumkoordinaten der abgebildeten Punkte von der Oberfläche des Prüfobjektes berechenbar sind. Mit Vorteil wird der Rotationskörper aus ausgewählten Stützpunkten eines Axialschnitts berechnet, um die Berechnung zu vereinfachen. Es entfällt damit der Aufwand, für jeden erfassten Bildpunkt des Prüfobjektes auch dessen Raumkoordinaten messtechnisch zu erfassen. Gemäß einem weiteren Aspekt der Erfindung werden die das Prüfobjekt abbildenden Bildpunkte in ein gemeinsames Objektkoordinatensystem übertragen. Die Berechnung der Raumkoordinaten von abgebildeten Objektpunkten erfordert eine Kalibrierung des Strahlengangs der Kamera. Ist dabei eine Korrektur der optischen Verzerrung innerhalb eines abgebildeten Abschnitts nicht erforderlich, so genügt es, die Öffnungswinkel der abbildenden Optik in horizontaler und vertikaler Bildrichtung zu ermitteln. Durch diese Kalibrierung ist in Kombination mit den vorgenannten Verfahrensschritten die räumliche Position eines abgebildeten Punktes von der Oberfläche des Prüfobjektes anhand seiner Bildkoordinaten berechenbar, d.h. seiner Position in der Abbildungsebene. Bei der digitalen Bildverarbeitung mit diskreten Bildpunkten bestehen die Bildkoordinaten üblicherweise aus Nummer der Bildzeile und Nummer der Bildspalte.

Wesentlicher Aspekt der obenstehend beschriebenen erfindungsgemäßen Verfahrensschritte ist es, die messtechnische Erfassung der Raumkoordinaten der in den einzelnen Ergebnisbildern abgebildeten Oberflächenpunkte zu vermeiden, in dem die Messung durch eine Berechnung ersetzt wird.

Gemäß einem Aspekt der Erfindung werden die Sektorengrenzen in den Ergebnisbildern ermittelt und außerhalb der Sektoren liegende Bildpunkte eliminiert, d.h. nicht weiterverwendet. Als Sektorengrenzen sind insbesondere Isoklinen geeignet. Hierdurch werden einander überlagernde Bildpunkte verhindert. Vorteilhafterweise entspricht die Lage der Sektorengrenzen der Anzahl der Prüfsektoren, die zur lückenlosen Abtastung des Prüfobjektes in Umfangsrichtung erforderlich ist bzw. zur Erstellung der Ergebnisbilder verwendet worden ist.

Gemäß einem weiteren Aspekt der Erfindung werden die Grenzlinien der Objektoberfläche in den einzelnen Ergebnisbildern ermittelt und außerhalb der Grenzlinien liegende Bildpunkte eliminiert. Als Grenzlinien kommen hier vor allem Sichtgrenzen in Betracht. Hierdurch können außerhalb des Objektes liegende Bildpunkte oder nicht interessierende Bereiche des Objektes ausgeblendet werden.

Mit Vorteil werden anschließend die berechneten Grenzlinien in ein gemeinsames Koordinatensystem übertragen. Entsprechen die Positionen der Sektorengrenzen der Anzahl der Prüfsektoren, dann stoßen die Sektorengrenzen von in Umfangsrichtung aufeinanderfolgenden Ergebnisbildern aneinander an und die innerhalb der jeweiligen Sektorengrenzen liegenden Bilddaten können direkt aneinander angehängt werden. Zur Übertragung der Bildpunkte in ein gemeinsames Koordinatensystem, das beispielsweise ein Polarkoordinatensystem sein kann, werden die jeweils in einem Ergebnisbild innerhalb der Grenzlinien liegenden Bildpunkte durch eine Interpolation in das gemeinsame Koordinatensystem übertragen. Diese Interpolation kann auch allein anhand der Bildkoordinaten sowohl der verwendeten Grenzlinien als auch der zu übertragenden Bildpunkte erfolgen. Bei dieser Vorgehensweise erfolgt die Interpolation in der Bildebene, wobei die Krümmung des Objektes orthogonal zur Bildebene vernachlässigt wird. Es hat sich allerdings in der Praxis gezeigt, dass diese Vereinfachung bei der Darstellung von Prüfergebnissen noch ausreichend genau ist. Wesentlicher Vorteil der Interpolation in der Bildebene unter Verwendung von Grenzlinien ist es, dass zur Berechnung der Grenzlinien nur jeweils ein Stützpunkt in dem Axialschnitt vorhanden sein muss.

Sind die Bildpunkte von verschiedenen Abschnitten bzw. Ergebnisbildern des Prüfobjektes in ein gemeinsames Koordinatensystem übertragen worden, so werden diese mit Vorteil in einer Gesamtansicht dargestellt. Bei dieser Gesamtansicht handelt es sich mit Vorteil um eine Rastergrafik, das heißt ein digitales Bild mit einer Vielzahl von diskreten Bildpunkten. Die Gesamtansicht kann gemäß einem Aspekt der Erfindung eine rechnerische Abwicklung der Objektoberfläche sein. Die Abwicklung kann - wie beispielsweise die Abwicklung der Oberfläche eines Reifens - verzerrt sein. Die Lesbarkeit ist für den Betrachter gegenüber der üblichen Einzelbilddarstellung dennoch deutlich verbessert. Mit Vorteil kann auch ein dreidimensionales Modell des Prüfobjektes berechnet und angezeigt werden, auf dessen Oberfläche die Bildpunkte der Ergebnisbilder anhand ihrer berechneten Raumkoordinaten positioniert und dargestellt werden.

Bei der Übertragung der Bildpunkte in ein gemeinsames Koordinatensystem können beim anschließenden Erstellen einer Rastergrafik Fehlstellen bzw. Lücken entstehen. Diese werden mit Vorteil durch eine Interpolation aus den Werten der umliegenden Oberflächenpunkte geschlossen.

Mit Vorteil wird die automatische, rechnergestützte Identifizierung von Merkmalen insbesondere Defekten des Prüfobjektes in der Gesamtansicht durchgeführt.

Hierdurch ist die Berechnung der korrekten Größe von Merkmalen insbesondere in Umfangsrichtung des Prüfobjektes mit großer Genauigkeit möglich.

Der ermittelte Axialschnitt wird gemäß einem Aspekt der Erfindung ferner zur Berechnung der Messkopfpositionen bei der Durchführung der Prüfung herangezogen. Ferner wird er mit Vorteil zur Berechnung der erforderlichen Anzahl von Sektoren herangezogen, die zur lückenlosen Prüfung des Objektes in Umfangsrichtung erforderlich ist.

Im Folgenden wird ein Ausführungsbeispiel der Erfindung anhand von Zeichnungen erläutert:
In den Zeichnungen zeigen:
- Fig. 1:: ein Prüfsystem zur abschnittsweisen, interferometrischen Prüfung von Reifen;
- Fig. 2a bis 2c:: die Förderung eines Reifens in das Prüfsystem mit gleichzeitiger Erfassung eines Axialschnittes;
- Fig. 3:: die Darstellung eines Axialschnittes mittels des in den Figuren 2a bis 2c dargestellten Verfahrens;
- Fig. 4:: ein Prüfsystem mit einem zusätzlichen Abstandssensor zur Erfassung eines Axialschnittes;
- Fig. 5:: die Darstellung eines Axialschnittes mittels des in Figur 4 dargestellten Verfahrens;
- Fig. 6:: die Darstellung eines resultierenden Axialschnittes als Kombination der Axialschnitte der Figuren 3 und 5;
- Fig. 7a:: die Positionierung und Ausrichtung des Messkopfes zu einem Reifen zur Prüfung von dessen Lauffläche von der Innenseite;
- Fig. 7b:: die Darstellung der berechneten Lage der Reifenbereiche bei Ausrichtung des Messkopfes auf die Innenseite des Reifens;
- Fig. 8a:: die Positionierung und Ausrichtung des Messkopfes zu einem Reifen zur Prüfung von dessen Seitenwand von der Außenseite;
- Fig. 8b:: die Darstellung der berechneten Lage der Reifenbereiche bei Ausrichtung des Messkopfes auf die Außenseite des Reifens;
- Fig. 9:: die Darstellung aller Einzelsektorbilder bei gesamtumfänglicher Prüfung des Reifens mit den Positionierungen und Ausrichtungen des Messkopfes aus Figur 7b und 8b;
- Fig. 10:: die Gesamtansicht aller Einzelsektoren aus Figur 9 nach Transformation der Sektorengrenzen und Grenzlinien in ein gemeinsames Objektkoordinatensystem;
- Fig. 11a bis 11c:: die Darstellung aller Einzelsektoren einer realen Messung an einem LKW-Reifen;
- Fig. 12:: die Gesamtansicht aller Einzelsektoren aus den Figur 11a bis 11c nach Transformation der Bilddaten in ein gemeinsames Objektkoordinatensystem.

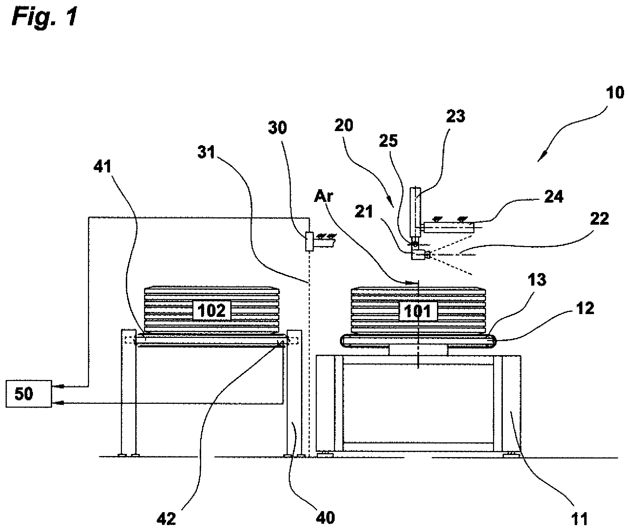

Die Figur 1 zeigt ein Prüfsystem, das der erfindungsgemäßen Vorrichtung entspricht und zur Durchführung des erfindungsgemäßen Verfahrens geeignet ist. Ein System zum Prüfen von Reifen 10 weist einen Messkopf 20 mit einer Kamera 21 zur Aufnahme von Bildern auf. Der Messkopf 20 kann über eine Positioniervorrichtung 24 und 23 horizontal und vertikal relativ zum Prüfobjekt 101 verfahren werden. Die horizontale Positioniervorrichtung 24 ist ortsfest mit dem Untergestell 11 verbunden, so dass der Messkopf 20 relativ zum Prüfobjekt horizontal und vertikal verfahrbar ist. Ferner kann über eine Schwenkachse 25 die Neigung der optischen Achse 22 der Kamera 21 gegenüber dem Prüfobjekt 101 verändert werden. Das Prüfsystem verfügt ferner über einen Drehteller 12 zum Drehen des Reifens 101 relativ zum Messkopf 20. Hierdurch wird ein Prüfen des Reifens 101 über seinen gesamten Umfang ermöglicht.

Der Drehteller 12 weist ein Förderband 13 auf, welches das Ein- und Ausfördern der zu prüfenden Reifen (101, 102) ermöglicht. Ein Abstandssensor 30 mit einem senkrecht nach unten gerichteten Laserstrahl 31 erlaubt die Messung des Abstandes vom Sensor 30 zum Auftreffpunkt des Laserstrahls 31 auf einer Oberfläche, insbesondere der Oberfläche der zu prüfenden Reifen. Der Sensor 30 ist fest mit dem Untergestell 11 verbunden. Der Sensor 30 ist mittig zur Breite des Förderbandes 13 ausgerichtet, so dass beim Fördern eines Reifens der Laserstrahl wenigstens näherungsweise in einer aus Rotationsachse des Reifens und Förderrichtung aufgespannten Ebene liegt. Zur Förderung von Reifen in das Prüfsystem 10 ist diesem ein Fördermodul 40 vorgeschaltet. Das Fördermodul 40 besitzt ein motorisch angetriebenes Förderband 41, das zur Messung des vom Reifen auf dem Fördermodul zurückgelegten Weges einen inkrementalen Schrittgeber (Encoder) 42 aufweist, der Bestandteil des Antriebs des Förderbandes 41 sein kann. Zur simultanen Erfassung des momentan zurückgelegten Weges in Förderrichtung sowie des momentanen, vom Sensor 30 erfassten Abstandswertes sind der Schrittgeber 42 und der Sensor 30 mit einer speicherprogrammierbaren Steuerung (SPS) 50 verbunden. Mittels Encoder 42, Sensor 30 und SPS 50 kann beim Einfördern eines Reifens vom Fördermodul 40 auf den Drehteller 12 ein Axialschnitt von der obenliegenden Seitenwand des Reifens gemessen werden.

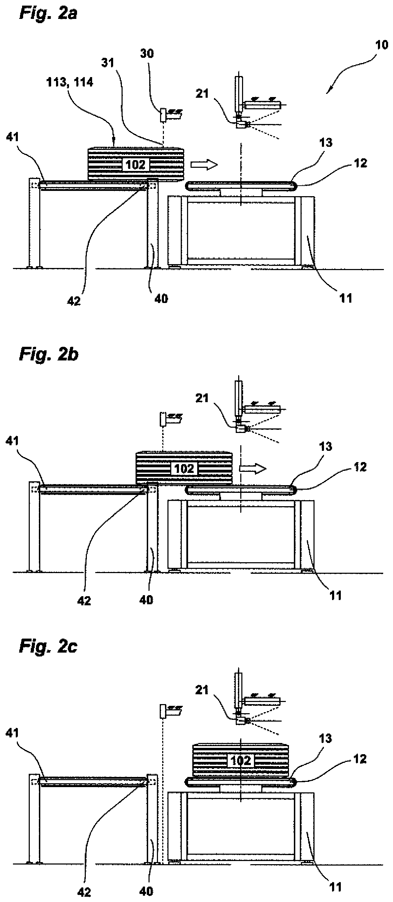

Dieser Vorgang ist in den Figuren 2a bis 2c gezeigt. Der Reifen 102 wird vom Fördermodul 40 mittels des Förderbandes 41 in Richtung des Förderbandes 13 auf dem Drehteller 12 bewegt. Dabei fährt der Reifen 102 unter dem Abstandssensor 30 durch, so dass der Sensor 30 die obere Seitenwand 113 und den oberen Wulst 114 des Reifens 102 abtastet. Der Encoder 42 liefert die zur zurückgelegten Wegstrecke des Reifens 102 proportionale Anzahl von Impulsen. Diese werden von der speicherprogrammierbaren Steuerung 50 gezählt und simultan zu jedem Impuls der momentane Messwert des Sensors 30 erfasst. Das Förderband 13 auf dem Drehteller 12, das mit gleicher Geschwindigkeit wie das Förderband 41 läuft, übernimmt den Reifen 102 vom Förderband 41 (Fig. 2b). Der Fördervorgang wird beendet sobald der Reifen 102 zentrisch auf dem Drehteller 12 zu liegen kommt (Fig. 2c). Zu diesem Zeitpunkt wird auch die Messwerterfassung zur Ermittlung des Axialschnittes durch die SPS 50 abgeschlossen.

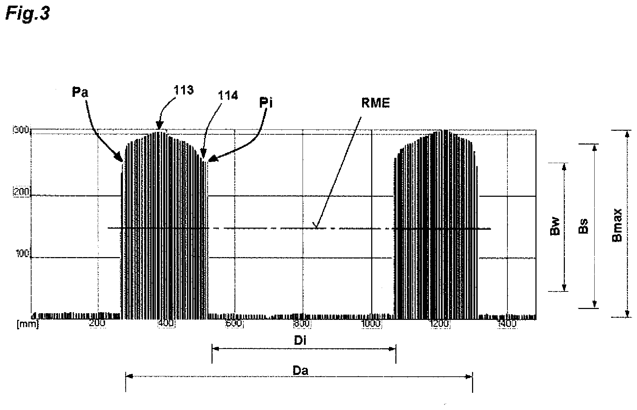

Das Ergebnis der Messung des Axialschnittes ist exemplarisch in der Figur 3 dargestellt. Aus dem Messergebnis ergeben sich unmittelbar die Werte für den äußeren Durchmesser Dₐ, den inneren Durchmesser Dᵢ des Reifens 102 sowie dessen Gesamtbreite Bₘₐₓ. Der innere Durchmesser Dᵢ entspricht dem Felgenlochdurchmesser des Reifens. Unter Annahme einer Spiegelsymmetrie um die Reifenmittenebene RME, deren Lage sich unmittelbar aus der Gesamtbreite Bₘₐₓ berechnen lässt, ergeben sich ferner der Schulterabstand Bₛ und der äußere Wulstabstand B_{w}. Zur Berechnung von Sichtgrenzen können insbesondere die Punkte Pₐ und Pᵢ herangezogen werden.

Obwohl sich die Berechnung unter der Annahme einer Spiegelsymmetrie des Reifens in der Praxis bewährt hat, können für Sonderbauformen von Reifen oder andere Prüfobjekte ein weiterer Abstandssensor unterhalb des Förderniveaus und mit nach oben gerichtetem Strahl sowie gegebenenfalls weitere Sensoren eingesetzt werden. Es ist auch möglich, den Laserstrahl 31 des Sensors 30 in der durch Rotationsachse Rₐ und der Förderrichtung aufgespannten Ebene zu drehen. Hierdurch kann mit Vorteil zusätzlich die Innenseite der untenliegenden Seitenwand wenigstens teilweise erfasst werden.

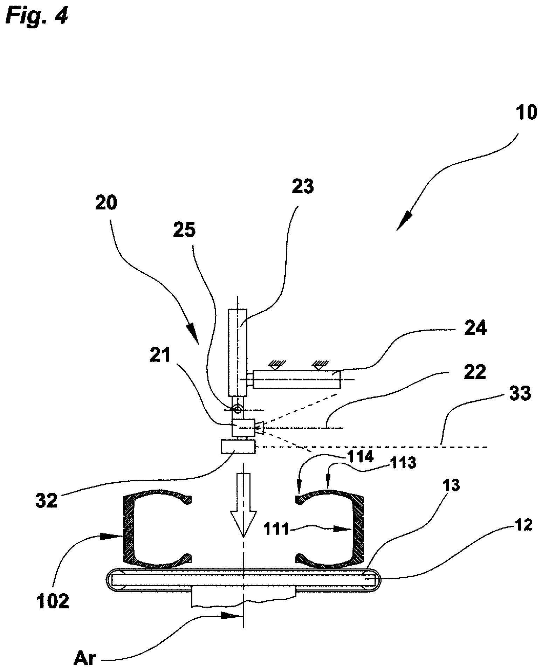

Die Figur 4 zeigt einen Abstandssensor 32, der unterhalb des Messkopfes 20 montiert ist und beim Hineinfahren des Messkopfes 20 in den Reifen 102 durch das Felgenloch einen Axialschnitt des Reifens erfasst. Dabei tastet der Laserstrahl 33 des Sensors 32 zunächst die obere Seitenwand 113 des Reifens 102 ab, dann die Innenseite des Wulstes 114 und zuletzt den Laufstreifen des Reifens von der Innenseite.

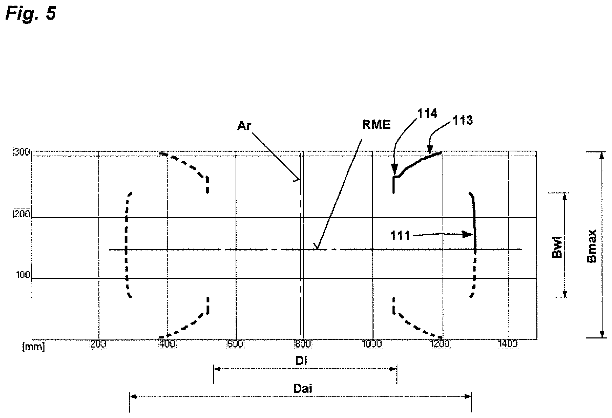

Die Figur 5 zeigt grafisch den mittels des in Figur 4 gezeigten Sensors 32 erfassten Axialschnitt. Die durchgezogene Linie ist dabei die tatsächlich messtechnisch erfasste Konturlinie, wohingegen die gestrichelten Anteile der Konturlinie durch Spiegelung an der Reifenmittenebene RME und der Rotationsachse Aᵣ berechnet werden. Durch diesen Axialschnitt können zusätzlich zu dem in Figur 3 gezeigten Axialschnitt die Werte für den inneren Wulstabstand B_{wi} und den Außendurchmesser Dₐᵢ an der Innenseite des Reifens bestimmt werden.

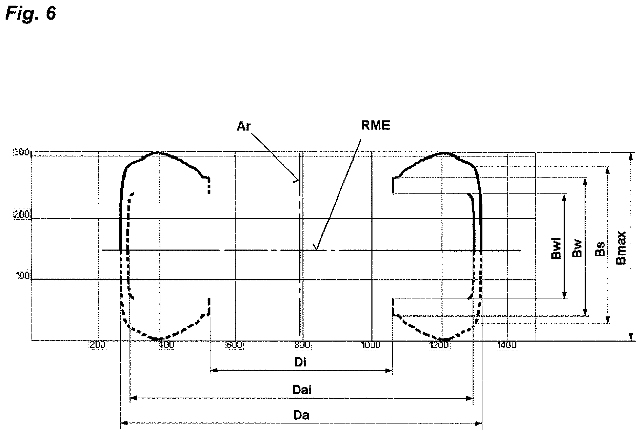

Die Figur 6 zeigt die Kombination der Axialschnitte aus der Figur 3 und der Figur 5. Gegenüber der Figur 3 wurde die unterhalb der Reifenmittenebene liegende Hälfte des Axialschnittes von der Außenseite des Reifens durch rechnerische Spiegelung der oberen Hälfte des äußeren Axialschnittes an der Reifenmittenebene erzeugt. Der aus der Kombination der Axialschnitte resultierende Axialschnitt ergibt ein genaueres Modell des Prüfobjektes. Hierdurch kann die Berechnung der Raumkoordinaten von abgebildeten Punkten der Oberfläche des Prüfobjekts mit größerer Genauigkeit durchgeführt werden.

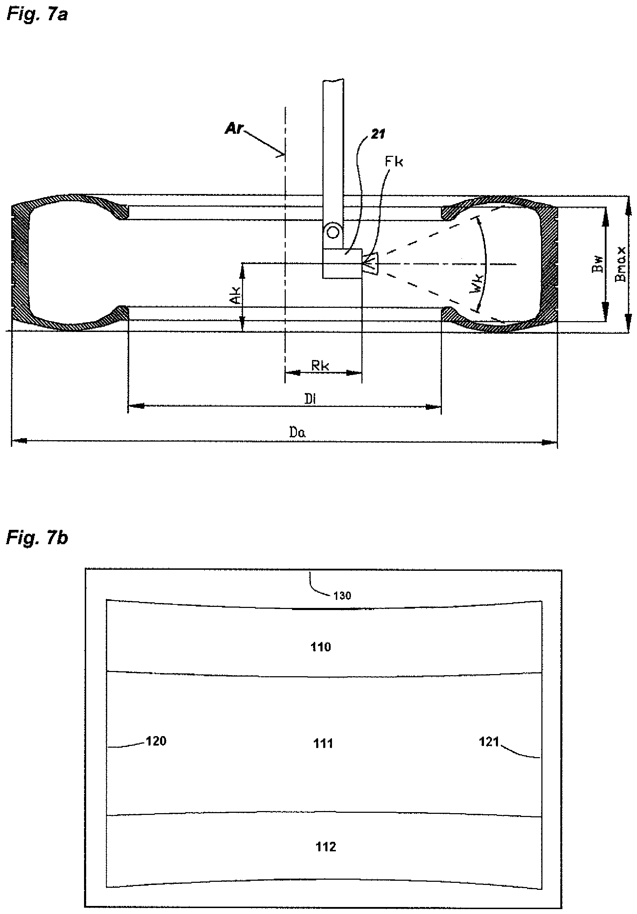

In der Figur 7a ist die Positionierung und Ausrichtung der Kamera 21 zur Prüfung der Lauffläche des Reifens 102 von der Innenseite gezeigt. Diese Prüfanordnung wird in der Praxis häufig verwendet.

Unter der erfindungsgemäßen Ermittlung der Position und Ausrichtung des Messkopfes relativ zu dem Axialschnitt von dem Prüfobjekt und Ausnutzung der Rotationssymmetrie des Prüfobjektes wird die Position des Prüfobjekts im Sichtfeld der Kamera berechnet. Das Ergebnis ist für die Positionierung und Ausrichtung der Kamera aus der Figur 7a in der Figur 7b grafisch dargestellt. Das Sichtfeld der Kamera ist begrenzt durch die Grenzlinie 130. Die Teilbereiche obenliegende Schulter 110, Laufstreifen 111 und untenliegende Schulter 112 sind mit ihren Grenzlinien innerhalb des Sichtfensters dargestellt. Die Grenzlinien werden durch rechnerische Projektion des durch den Axialschnitt festgelegten Rotationskörpers in die Bildebene berechnet. Ferner ist die linke Sektorengrenze 120 und die rechte Sektorengrenze 121 eingezeichnet. Die Position der Sektorgrenzen (120, 121) ergibt sich aus der Breite des Kamerasichtfensters, der Position und Ausrichtung der Kamera relativ zum Axialschnitt sowie der Anzahl der Prüfsektoren. Die berechneten Sektorgrenzen (120, 121) dienen insbesondere zur Elimination von Überlappungsbereichen in der Gesamtdarstellung.

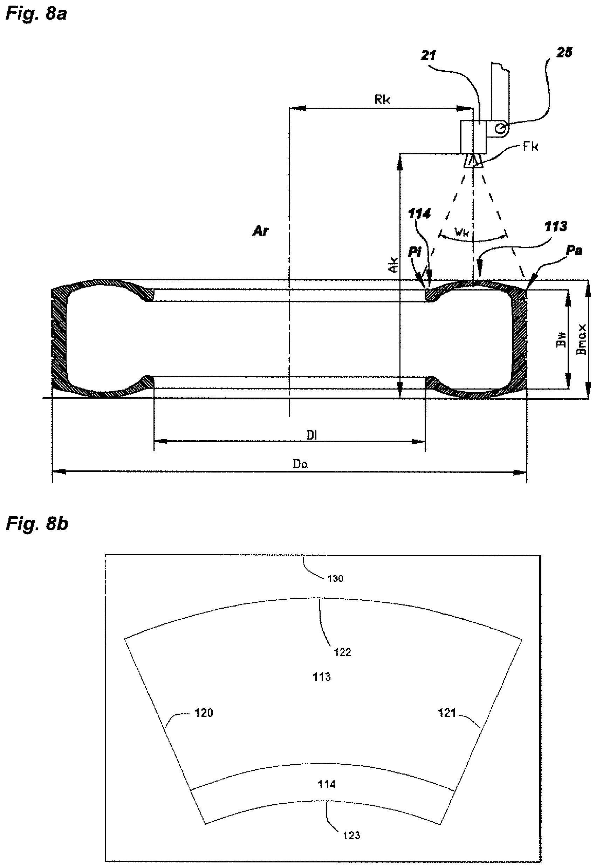

Die Figur 8a zeigt die Verhältnisse bei senkrechtem Blick der Kamera auf die Außenseite der Reifenseitenwand. Dies ist ebenfalls eine typische Anordnung zur Prüfung von Reifen. Bei dieser Positionierung und Ausrichtung der Kamera werden die Seitenwand 113 und der Wulst 114 des Reifens von der Außenseite geprüft.

Die Figur 8b zeigt die daraus berechnete Lage des Reifens 102 im Sichtfeld der Kamera. Das Sichtfeld ist begrenzt durch die Linie 130. Die Seitenwand des Reifens teilt sich auf in den Seitenwandbereich 113 (außerhalb der Felge) und dem Wulstbereich 114. Die Grenzlinien in radialer Richtung sind die äußere Grenzlinie 122 und die innere Grenzlinie 123. Die äußere Grenzlinie 122 kann erzeugt werden durch Rotation des Punktes Pₐ um die Rotationsachse Aᵣ und die innere Grenzlinie 123 durch Rotation des Punktes Pᵢ um die Rotationsachse Aᵣ (Figur 3 und Figur 8a). Die berechneten Grenzlinien des Sektors in Umfangsrichtung sind wiederum die Linie 120 für die linke Sektorgrenze und die Linie 121 für die rechte Sektorgrenze. In der Praxis hat es sich gezeigt, dass durch exzentrische Lagerung des Reifens auf dem Drehteller des Prüfsystems aufgrund von Positionierfehlern der berechnete Seitenwandabschnitt vertikal zur tatsächlichen Abbildung des Prüfobjektes versetzt sein kann. Mit Vorteil wird über geeignete Bildverarbeitungsfunktionen der Versatz sektorweise ermittelt und eliminiert.

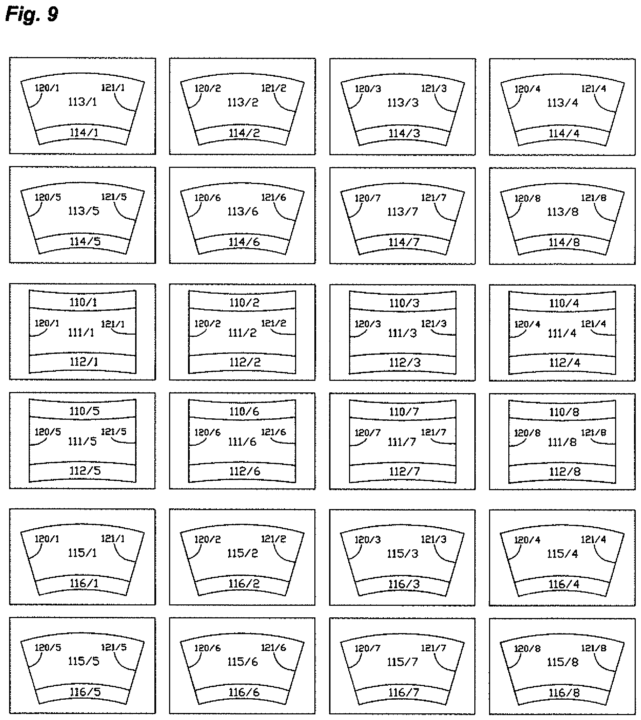

Die Figur 9 zeigt eine schematische Einzelbilddarstellung aller Sektoren einer Reifenprüfung in drei Durchgängen. Dabei zeigen die obersten 2 Reihen die 8 Ergebnisbilder von der 1. Seitenwand des Reifens gemäß einer Anordnung nach Figur 8a, die mittleren beiden Reihen die 8 Ergebnisbilder von der Innenseite des Laufstreifens gemäß einer Anordnung nach Figur 7a und die unteren beiden Reihen die 8 Ergebnisbilder von der 2. Seitenwand des Reifens gemäß einer Anordnung nach Figur 8a. Zur Prüfung der 2. Seitenwand muss der Reifen gewendet werden, so dass die untere Seitenwand des Reifens für die Prüfung zugänglich ist. Ferner kann in der Praxis je nach Reifengeometrie eine unterschiedliche Sektorenzahl erforderlich sein, um die Seitenwand des Reifen und die Lauffläche des Reifens lückenlos zu prüfen.

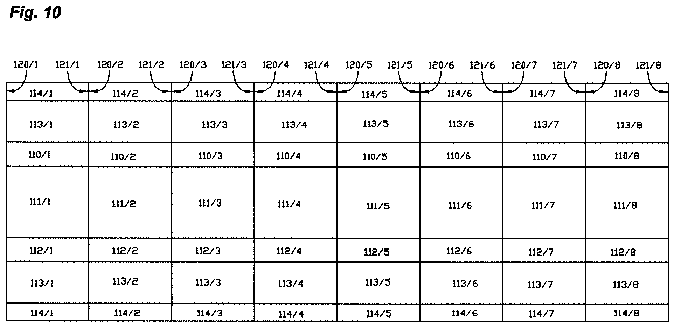

Die Figur 10 zeigt die nach dem neuen Verfahren aus denen in Figur 9 gezeigten Einzelbildern berechnete Gesamtansicht. Alle in den Einzelbildern gezeigten Reifenbereiche innerhalb der Sektorengrenzen finden sich in einer lagerichtigen Position zueinander wieder. Außerhalb der Sektoren- und der Reifenbereiche liegende Bildpunkte sind eliminiert, so dass sich eine übersichtliche Darstellung der gesamten Reifenoberfläche ergibt. Bei dieser Darstellung fallen die rechten Sektorengrenzen (121/1 ... 121/8) jeweils mit der linken Sektorgrenze (120/1 ... 120/8) des in Umfangsrichtung des Reifens nachfolgenden Sektors zusammen. Für die Anwendung von Filterfunktionen oder die Berechnung von Fehlstellen wird mit Vorteil die Sektorgrenze 121/8 mit der Sektorgrenze 120/1 verbunden. In der digitalen Bildverarbeitung kann dies über einen Ringpuffer realisiert werden.

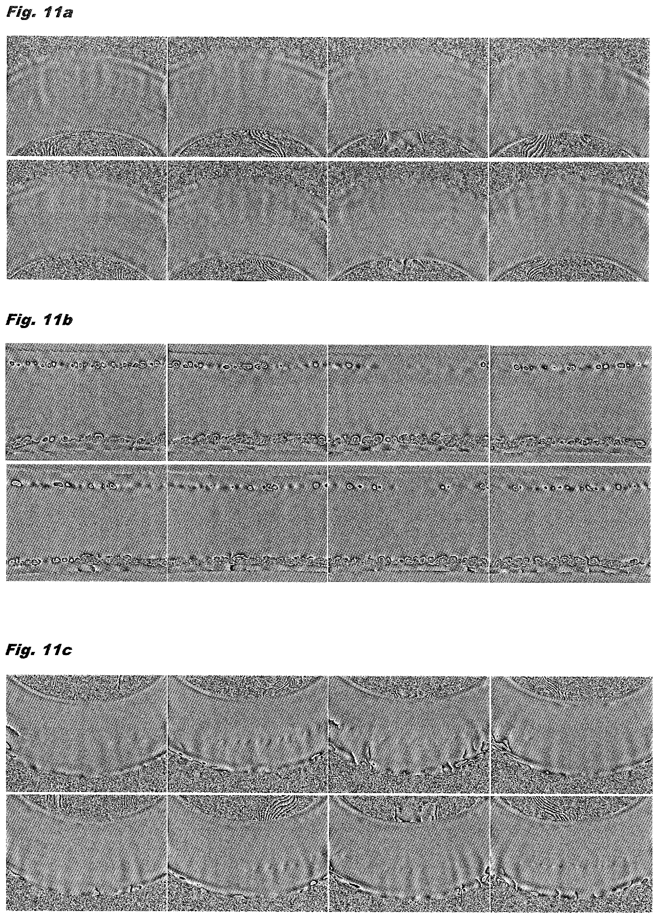

Die Figur 11a bis 11c zeigen die Zusammenstellung aller Ergebnisbilder einer Wulst zu Wulst Prüfung an einem LKW-Reifen. Die Ergebnisbilder von der Außenseite der ersten Seitenwand sind in Figur 11a gezeigt. Die Ergebnisbilder von der Innenseite des Laufstreifens sind in Figur 11b dargestellt. Die Ergebnisbilder von der Außenseite der zweiten Seitenwand sind in der Figur 11c dargestellt. Die Bilder des Laufstreifens in Figur 11b zeigen Gürtelkantenlösungen in der oberen und unteren Reifenschulter, die sich über mehrere Sektoren erstrecken.

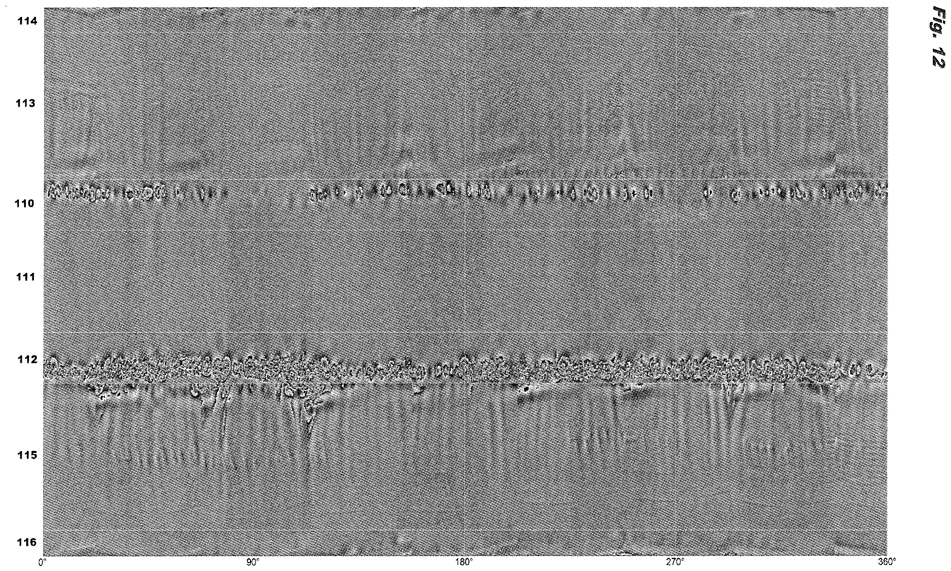

In der Figur 12 sind die Bildpunkte vom Prüfobjekt aller Ergebnisbilder der Figuren 11a bis 11c nach dem erfindungsgemäßen Verfahren in eine Darstellung übertragen. Dabei sind Überlappungsbereiche und Bereiche, die außerhalb des Reifens liegen, vollständig eliminiert. Dies ist insbesondere in den Seitenwandbereichen 113, 115 und den Wulstbereichen 114, 116 ersichtlich. Die Gürtelkantenlösungen in den Schulterbereichen 110 und 112 sind sektorübergreifend zusammengefügt und so in ihrer wahren Ausdehnung in Umfangsrichtung erkennbar. Gut erkennbar ist nun auch die stellenweise Ausdehnung der Gürtelkantenlösungen in die Seitenwandbereiche hinein.

**Bezugszeichenliste**

| | | | |
|---|---|---|---|
| 10 | Prüfsystem | 113 | 1. Seitenwand |
| 11 | Untergestell | 114 | 1.Wulst |
| 12 | Drehteller | 115 | 2. Seitenwand |
| 13 | Förderband | 116 | 2. Wulst |
| | | 120 | Linke Sektorgrenze |
| 20 | Messkopf | 121 | Rechte Sektorgrenze |
| 21 | Kamera | 122 | Äußere Begrenzungslinie |
| 22 | Optische Achse Kamera | 123 | Innere Begrenzungslinie |
| 23 | Vertikales Linearsystem | 130 | Sichtfeldbegrenzung |
| 24 | Horizontales Linearsystem | | |
| 25 | Schwenkachse | Aᵣ | Rotationsachse des Reifens |
| | | Bₘₐₓ | Maximale Breite |
| 30 | Abstandssensor | Bₛ | Breite an der Reifenschulter |
| 31 | Laserstrahl Abstandssensor 30 | B_{w} | Breite am Reifenwulst |
| 32 | Abstandssensor | B_{wi} | Breite am Reifenwulst innen |
| 33 | Laserstrahl Abstandssensor 32 | Dₐ | Durchmesser außen |
| | | Dₐᵢ | Durchmesser außen an der Innenseite |
| 40 | Fördermodul | Dᵢ | Durchmesser innen |
| 41 | Förderband | Pₐ | Äußerer Begrenzungspunkt |
| 42 | Inkrementaler Schrittgeber | Pᵢ | Innerer Begrenzungspunkt |
| 50 | Speicherprogrammierbare Steuerung (SPS) | RME | Reifenmittenebene |
| | | Fₖ | Hauptpunkt Kameraoptik |
| 101 | Reifen | Wₖ | Öffnungswinkel Sichtfeld Kamera |
| 102 | Reifen | Aₖ | Axiale bzw. vertikale Position Kamera |
| 110 | Bereich obere Schulter | Rₖ | Radiale bzw. horizontale Position Kamera |
| 111 | Bereich Laufstreifenmitte | | |
| 112 | Bereich untere Schulter | | |

## Patentansprüche

1. Verfahren zur Untersuchung von rotationssymmetrischen Prüfobjekten, insbesondere Fahrzeug- oder Flugzeugreifen (101, 102), bei dem
das Prüfobjekt (101, 102) verschiedenen Belastungen ausgesetzt wird;
die Oberfläche des Prüfobjektes (101, 102) in räumlich versetzten Abschnitten mit einem oder mehreren Messköpfen (20) mit jeweils einer Kamera (21) untersucht wird;
Abbildungen von der Oberfläche des Prüfobjektes (101, 102) bei verschiedenen Belastungszuständen von einem Bildsensor der Kamera (21) erfasst werden;
die erfassten Abbildungen zur Weiterverarbeitung einem Bildverarbeitungssystem zugeführt werden;
aus den Abbildungen von dem Bildverarbeitungssystem die Verschiebung oder den Spannungs-/ Dehnungszustand des Prüfobjektes (101, 102) darstellende Ergebnisbilder berechnet werden;
**dadurch gekennzeichnet,**
**dass** wenigstens ein Axialschnitt von dem Prüfobjekt (101, 102) ermittelt wird;
**dass** für die untersuchten Abschnitte der Objektoberfläche jeweils die zutreffende Position und Ausrichtung des Messkopfes (20) relativ zu dem ermittelten Axialschnitt und die Drehstellung des Messkopfes (20) in Umfangsrichtung relativ zum Prüfobjekt (101, 102) ermittelt werden und
daraus die räumliche Position des in den Ergebnisbildern jeweils abgebildeten Abschnitts von der Objektoberfläche relativ zum Prüfobjekt (101, 102) berechnet wird.

2. Verfahren nach Anspruch 1, **dadurch gekennzeichnet, dass** die Objektoberfläche mit einem oder mehreren interferometrischen Messköpfen (20) untersucht wird.

3. Verfahren nach Anspruch 1 oder 2, **dadurch gekennzeichnet,**
**dass** ein Axialschnitt von der Außenseite des Prüfobjektes (101, 102) ermittelt wird oder
**dass** ein Axialschnitt von der Innenseite des Prüfobjektes (101, 102) ermittelt wird oder
**dass** ein Axialschnitt von der Außenseite und der Innenseite des Prüfobjektes (101, 102) ermittelt wird.

4. Verfahren nach einem der Ansprüche 1 bis 3, **dadurch gekennzeichnet, dass** für die in den Ergebnisbildern abgebildeten Punkte von der Oberfläche des Prüfobjektes (101, 102) die Raumkoordinaten berechnet und den entsprechenden Bildkoordinaten zugeordnet werden;
wobei vorzugsweise ein durch in einem Axialschnitt ermittelte Stützpunkte festgelegter Rotationskörper berechnet wird,
die Projektion des berechneten Rotationskörpers in die Abbildungsebene berechnet wird und
daraus den Bildkoordinaten die zutreffenden Raumkoordinaten zugeordnet werden.

5. Verfahren nach Anspruch 4, **dadurch gekennzeichnet, dass** die Raumkoordinaten in ein gemeinsames Objektkoordinatensystem übertragen werden.

6. Verfahren nach einem der Ansprüche 1 bis 5, **dadurch gekennzeichnet, dass** die Lage der Sektorengrenzen in den Ergebnisbildern berechnet wird;
wobei vorzugsweise außerhalb der Sektoren liegende Bildpunkte nicht weiterverarbeitet werden.

7. Verfahren nach Anspruch 1 bis 6, **dadurch gekennzeichnet, dass** Grenzlinien der Objektoberfläche in den einzelnen Ergebnisbildern berechnet werden;
wobei vorzugsweise außerhalb der berechneten Grenzlinien liegende Bildpunkte nicht weiterverarbeitet werden.

8. Verfahren nach Anspruch 6 oder 7, **dadurch gekennzeichnet, dass** die berechneten Grenzlinien in ein gemeinsames Koordinatensystem übertragen werden und die jeweils in einem Ergebnisbild innerhalb der Grenzlinien liegenden Bildpunkte durch eine Interpolation in das gemeinsame Koordinatensystem übertragen werden.

9. Verfahren nach einem der Ansprüche 4 bis 8, **dadurch gekennzeichnet, dass** die Bildpunkte von zwei oder mehr Ergebnisbildern in einer Gesamtansicht in einem Objektkoordinatensystem dargestellt werden.

10. Verfahren nach einem der Ansprüche 4 bis 9, **dadurch gekennzeichnet, dass** eine Abwicklung der Objektoberfläche berechnet wird;
wobei vorzugsweise bei der Abwicklung der Objektoberfläche zwischen den Bildpunkten entstehende Lücken über eine Interpolation geschlossen werden.

11. Verfahren nach Anspruch 9 oder 10, **dadurch gekennzeichnet, dass** die automatische Identifizierung von Merkmalen, insbesondere von Defekten des Prüfobjektes, in der Gesamtansicht durchgeführt wird.

12. Verfahren nach einem der Ansprüche 1 bis 11, **dadurch gekennzeichnet, dass** der ermittelte Axialschnitt zur Berechnung der Messkopfposition bei der Durchführung der Prüfung verwendet wird.

13. Verfahren nach einem der Ansprüche 1 bis 12, **dadurch gekennzeichnet, dass** der ermittelte Axialschnitt zur Berechnung der Anzahl von Sektoren verwendet wird, die zur lückenlosen Prüfung des Objektes in Umfangsrichtung erforderlich ist.

14. Prüfsystem zur Untersuchung von rotationssymmetrischen Prüfobjekten (101, 102) mittels des Verfahrens nach einem der Ansprüche 1 bis 13, umfassend:
wenigstens einen Messkopf (20) mit einer Kamera (21) zur Aufnahme von Bilddaten und
ein an die Kamera (21) angeschlossenes Bildverarbeitungssystem zur Weiterverarbeitung der von der Kamera (21) erzeugten Bilder, wobei das Bildverarbeitungssystem eingerichtet ist, Abbildungen zu erzeugen und aus diesen Abbildungen die Verschiebung oder den Spannungs-/ Dehnungszustand des Prüfobjektes (101, 102) darstellende Ergebnisbilder zu berechnen;
eine Vorrichtung (13) zur Positionierung des Prüfobjektes (101, 102) relativ zum Messkopf (20);
ein Konturerfassungssystem (30) zur Ermittlung wenigstens eines Axialschnittes von dem Prüfobjekt (101, 102);
Mittel zur Bestimmung der Position des Messkopfes (20) relativ zum Axialschnitt des Prüfobjektes (101, 102) und der Drehstellung des Messkopfes (20) relativ zum Prüfobjekt (101, 102) während der Aufnahme von Bilddaten;
Mittel zur Berechnung der räumlichen Position des in den Ergebnisbildern jeweils abgebildeten Abschnitts von der Objektoberfläche relativ zum Prüfobjekt (101, 102);
Mittel zur Erfassung von räumlich versetzten Oberflächenabschnitten des Prüfobjektes (101, 102) und
Mittel zur Bestimmung der räumlichen Position der erfassten Oberflächenabschnitte relativ zum Prüfobjekt (101, 102).

15. Prüfsystem nach Anspruch 14, **gekennzeichnet durch** wenigstens eine Vorrichtung (12, 23, 24, 25) zur Positionierung des Messkopfes (20) relativ zu dem Prüfobjekt (101, 102).

16. Prüfsystem nach Anspruch 14 oder 15, **dadurch gekennzeichnet, dass** das Konturerfassungssystem einen Abstandssensor (30) und ein Fördermodul (40) mit einer Vorrichtung (42) zur Messung des Vorschubs umfasst;
wobei vorzugsweise die Messrichtung des Abstandssensors (30) parallel zur Rotationsachse des Prüfobjekts (101, 102) ausgerichtet ist.

17. Prüfsystem nach einem der Ansprüche 14 bis 16, **gekennzeichnet durch** ein zweites Konturerfassungssystem (32) zur Messung eines Axialschnittes von der Innenseite des Prüfobjektes (101, 102).

## Claims

1. A method for testing rotationally symmetrical test objects, in particular vehicle or aircraft tires (101, 102), for which
the test object (101, 102) is subjected to different loads;
the surface of the test object (101, 102) is examined in spatially offset sections with one or more measuring heads (20) each having a camera (21);
images of the surface of the test object (101, 102) are detected at different load conditions by an image sensor of the camera (21);
the captured images are supplied to an image processing system for further processing;
the displacement or stress/strain state is calculated on the resulting images displaying the test object (101, 102) via the images of the image processing system; **characterised in that**
at least one axial section of the test object (101, 102) is determined;
that the relevant position and orientation of the measuring head (20) relative to the determined axial section, and the rotational position of the measuring head (20) in the circumferential direction relative to the test object (101, 102) are respectively determined for the examined sections of the object surface, and
thereof the spatial position is calculated of the resulting images of each imaged portion of the object surface relative to the test object (101, 102).

2. The method according to claim 1, **characterised in that** the object surface is examined with one or more interferometric measuring heads (20).

3. The method according to claim 1 or 2, **characterised in that**
an axial section is determined from the outside of the test object (101, 102) or
that an axial section is determined from the inside of the test object (101, 102) or that an axial section is determined from the outside and the inside of the test object (101, 102).

4. The method according to any one of the claims 1 to 3, **characterised in that** the spatial coordinates are calculated for the points imaged in the resulting images of the surface of the test object (101, 102) and assigned to the corresponding image coordinates;
wherein preferably a defined rotational body is calculated based on interpolation points determined of an axial section,
the projection of the determined rotational body is transferred into the image plane and thereof the image coordinates are assigned to the applicable spatial coordinates.

5. The method according to claim 4, **characterised in that** the spatial coordinates are transmitted in a common object coordinate system.

6. The method according to any one of the claims 1 to 5, **characterised in that** the position of the sector boundaries is calculated in the resulting images;
wherein preferably image points lying outside the sectors are not further processed.

7. The method according to any one of the claims 1 to 6, **characterised in that** boundary lines of the object surface are calculated in the individual resulting images;
wherein preferably image points lying outside the calculated boundary lines are not further processed.

8. The method according to claim 6 or 7, **characterised in that** the calculated boundary lines are transmitted into a common coordinate system and the image points each lying within the boundary lines of a resulting image are transmitted via interpolation into the common coordinate system.

9. The method according to any one of the claims 4 to 8, **characterised in that** the image points of two or more resulting images are displayed in an overall view within an object coordinate system.

10. The method according to any one of the claims 4 to 9, **characterised in that** an unwinding of the object surface is calculated;
wherein preferably gaps resulting between the image points while unwinding the object surface are closed via an interpolation.

11. The method according to any one of the claims 9 or 10, **characterised in that** the automatic identification of features, in particular defects of the test object, is performed in the overall view.

12. The method according to any one of claims 1 to 11, **characterised in that** the determined axial section for calculating the position of the measuring head is used in the execution of the test.

13. The method according to any one of the claims 1 to 12, **characterised in that** the determined axial section is used for calculating the number of sectors, which are required for the seamless test of the object in the circumferential direction.

14. A test system for testing rotationally symmetrical test objects (101, 102) by means of the method according to any one of the claims 1 to 13, comprising:
at least one measuring head (20) with a camera (21) for recording image data and an image processing system connected to the camera (21) for further processing of the images generated by the camera (21), wherein the image processing system is configured to generate images and to calculate of these images the displacement or the stress/strain state of the resulting images displaying the test object (101, 102);
a device (13) for positioning the test object (101, 102) relative to the measuring head (20);
a contour detection system (30) for detecting at least one axial section of the test object (101, 102);
means for determining the position of the measuring head (20) relative to the axial section of the test object (101, 102) and the rotational position of the measuring head (20) relative to the test object (101, 102) during the capturing of image data;
means for calculating the spatial position of the section displaying the object surface relative to the test object (101, 102) of each of the resulting images;
means for detecting spatially offset surface sections of the test object (101, 102) and
means for determining the spatial position of the detected surface sections relative to the test object (101, 102).

15. The test system according to claim 14, **characterised by** at least one device (12, 23, 24, 25) for positioning the measuring head (20) relative to the test object (101, 102).

16. The test system according to claim 14 or 15, **characterised in that** the contour detection system comprises a distance sensor (30) and a conveyor module (40) with a device (42) for measuring the feed;
wherein preferably the measuring direction of the distance sensor (30) is aligned in parallel to the axis of rotation of the test object (101, 102).

17. The test system according to any one of the claims 14 to 16, **characterised by** a second contour detection system (32) for measuring an axial section from the inside of the test object (101, 102).

## Revendications

1. Procédé d'examen d'objets à tester à symétrie de révolution, en particulier de pneumatiques de véhicule ou d'avion (101, 102), dans lequel
l'objet à tester (101, 102) est exposé à différentes charges ;
la surface de l'objet à tester (101, 102) est examinée dans des portions décalées dans l'espace à l'aide d'une ou de plusieurs têtes de mesure (20) pourvues d'une caméra respective (21) ;
des images de la surface de l'objet à tester (101, 102) sont saisies par un capteur d'image de la caméra (21) dans différents états de charge ;
les images saisies sont transmises à un système de traitement d'images pour une poursuite du traitement ;
des images résultantes représentant le déplacement ou l'état de tension/d'allongement de l'objet à tester (101, 102) sont calculées à partir des images par le système de traitement d'images ;
**caractérisé en ce que**
on détermine au moins une coupe axiale de l'objet à tester (101, 102) ;
pour les portions examinées de la surface de l'objet, on détermine respectivement la position et l'orientation correspondantes de la tête de mesure (20) par rapport à la coupe axiale déterminée et la position de rotation de la tête de mesure (20) en direction périphérique par rapport à l'objet à tester (101, 102), et
sur cette base, on calcule la position spatiale de la portion, représentée dans les images résultantes, de la surface de l'objet par rapport à l'objet à tester (101, 102).

2. Procédé selon la revendication 1,
**caractérisé en ce que**
on examine la surface de l'objet à l'aide d'une ou de plusieurs têtes de mesure interférométriques.

3. Procédé selon la revendication 1 ou 2,
**caractérisé en ce que**
on détermine une coupe axiale depuis le côté extérieur de l'objet à tester (101, 102), ou
on détermine une coupe axiale depuis le côté intérieur de l'objet à tester (101, 102), ou
on détermine une coupe axiale depuis le côté extérieur et depuis le côté intérieur de l'objet à tester (101, 102).

4. Procédé selon l'une des revendications 1 à 3,
**caractérisé en ce que**
pour les points, représentés dans les images résultantes, de la surface de l'objet à tester (101, 102), on calcule les coordonnées spatiales et on les associe aux coordonnées d'image correspondantes ;
de préférence, on calcule un corps de rotation fixé par des points d'appui déterminés dans une coupe axiale,
on calcule la projection du corps de rotation calculé dans le plan de l'image, et
à partir de celle-ci, on associe les coordonnés spatiales correspondantes aux coordonnées de l'image.

5. Procédé selon la revendication 4,
**caractérisé en ce que**
on transmet les coordonnées spatiales dans un système commun de coordonnées de l'objet.

6. Procédé selon l'une des revendications 1 à 5,
**caractérisé en ce que**
on calcule la position des limites des secteurs dans les images résultantes ;
de préférence, des points d'image situés à l'extérieur des secteurs ne sont pas traités.

7. Procédé selon l'une des revendications 1 à 6,
**caractérisé en ce que**
on calcule des lignes limites de la surface de l'objet dans les images résultantes individuelles ;
de préférence, des points d'image situés à l'extérieur des lignes limites calculées ne sont pas traités.

8. Procédé selon la revendication 6 ou 7,
**caractérisé en ce que**
on transmet les lignes limites calculées dans un système de coordonnées commun, et on transmet les points d'image respectifs situés à l'intérieur des lignes limites dans une image résultante par interpolation dans le système de coordonnées commun.

9. Procédé selon l'une des revendications 4 à 8,
**caractérisé en ce que**
on représente les points d'image de deux images résultantes ou plus dans une vue d'ensemble dans un système de coordonnées de l'objet.

10. Procédé selon l'une des revendications 4 à 9,
**caractérisé en ce que**
on calcule une développante de la surface de l'objet ;
de préférence, on comble par interpolation des lacunes qui apparaissent entre les points d'image dans la développante de la surface de l'objet.

11. Procédé selon la revendication 9 ou 10,
**caractérisé en ce que**
l'identification automatique de caractéristiques, en particulier de défauts de l'objet à tester, est mise en œuvre dans la vue d'ensemble.

12. Procédé selon l'une des revendications 1 à 11,
**caractérisé en ce que**
on utilise la coupe axiale déterminée pour calculer la position de la tête de mesure lors de la mise en œuvre du test.

13. Procédé selon l'une des revendications 1 à 12,
**caractérisé en ce que**
on utilise la coupe axiale déterminée pour calculer le nombre de secteurs qui est nécessaire pour l'examen complet de l'objet en direction périphérique.

14. Système de test pour examiner des objets à tester à symétrie de révolution (101, 102) au moyen du procédé selon l'une des revendications 1 à 13, comprenant :
au moins une tête de mesure (20) pourvue d'une caméra (21) pour saisir des données d'image, et
un système de traitement d'images branché à la caméra (21) pour poursuivre le traitement des images générées par la caméra (21), le système de traitement d'images étant conçu pour générer des images et pour calculer à partir de ces images des images résultantes représentant le déplacement ou l'état de tension/d'allongement de l'objet à tester (101, 102) ;
un dispositif (13) pour positionner l'objet à tester (101, 102) par rapport à la tête de mesure (20) ;
un système de détection de contour (30) pour déterminer au moins une coupe axiale de l'objet à tester (101, 102) ;
des moyens pour déterminer la position de la tête de mesure (20) par rapport à la coupe axiale de l'objet à tester (101, 102) et de la position de rotation de la tête de mesure (20) par rapport à l'objet à tester (101, 102), pendant la saisie de données d'image ;
des moyens pour calculer la position spatiale de la portion, représentée respectivement dans les images résultantes, de la surface de l'objet par rapport à l'objet à tester (101, 102) ;
des moyens pour détecter des portions de surface spatialement décalées de l'objet à tester (101, 102), et
des moyens pour déterminer la position spatiale des portions de surface détectées par rapport à l'objet à tester (101, 102).

15. Système de test selon la revendication 14,
**caractérisé par**
au moins un dispositif (12, 23, 24, 25) pour positionner la tête de mesure (20) par rapport à l'objet à tester (101, 102).

16. Système de test selon la revendication 14 ou 15,
**caractérisé en ce que**
le système de détection de contour comprend un capteur de distance (30) et un module de convoyage (40) pourvu d'un dispositif (42) pour mesurer l'avance ;
de préférence, la direction de mesure du capteur de distance (30) est orientée parallèlement à l'axe de rotation de l'objet à tester (101, 102).

17. Système de test selon l'une des revendications 14 à 16,
**caractérisé par**
un second système de détection de contour (32) pour mesurer une coupe axiale depuis le côté intérieur de l'objet à tester (101, 102).
